# EUROPÄISCHE PATENTSCHRIFT

(11) **EP 2 823 882 B1**
(45) Veröffentlichungstag und Bekanntmachung des Hinweises auf die Patenterteilung: **31.10.2018**
(21) Anmeldenummer: 14176019.9
(22) Anmeldetag: 07.07.2014
(51) Int. Cl.: B01F 15/04, C02F 1/68, C02F 1/50, D21C 5/00, D21H 21/36, C02F 103/28

(54) **VERFAHREN UND SYSTEM ZUR BEHANDLUNG VON WÄSSRIGEN PROZESSFLÜSSIGKEITEN IN EINEM TEILGESCHLOSSENEN SIEBWASSERKREISLAUF**
PROCESS AND SYSTEM FOR TREATMENT OF AQUEOUS PROCESS FLUIDS IN PARTIALLY CLOSED WHITE WATER CIRCUIT
PROCÉDÉ ET SYSTÈME DU TRAITEMENT DES LIQUIDES DES PROCÉDÉS AQUEUX DANS UN CIRCUIT DES EAUX BLANCHES PARTIELLEMENT FERMÉ

(30) Priorität: 09.07.2013 DE 102013107245
(43) Veröffentlichungstag der Anmeldung: 14.01.2015
(73) Patentinhaber: Alexander Erdtmann Dosiertechnik, 74731 Walldürn (DE)
(72) Erfinder: Erdtmann, Alexander, 74731 Walldürn (DE)
(74) Vertreter: Meyer-Dulheuer, Karl-Hermann

(56) Entgegenhaltungen:
- EP-A1- 1 746 075
- WO-A1-2004/022490
- DE-A1- 10 017 012
- DE-A1- 10 150 271
- US-A1- 2005 274 657
- US-A1- 2008 017 586

## Beschreibung

Die vorliegende Erfindung betrifft ein Verfahren zur Behandlung von wässrigen Prozessflüssigkeiten im teilgeschlossenen Siebwasserkreislauf bei der Papierherstellung, der mindestens einen Siebwasserbehälter und damit verbundene Rohrleitungen vom Siebwasserbehälter über den Vertikalsortierer zum Stoffauflauf enthält, mit Bioziden und/oder Enzymen zur Vermeidung und/oder Entfernung von Schleimablagerungen durch diskontinuierliche Dosierung der flüssigen Wirkstoffe oder Lösungen der festen Wirkstoffe, wobei die Dosierung der Wirkstoffe in Abhängigkeit des Volumenstroms in die den Vorratsbehälter verlassenden Rohrleitungen erfolgt.
Biozide (Desinfektionsmittel) und/oder Enzyme werden in unterschiedlichen Anlagen zur effizienten Behandlung von variablen Großkreisläufen und deren Behältern und Lagertanks eingesetzt, um Maschinen und Anlagen sauber zu halten. Die Erfindung findet insbesondere Anwendung bei Anlagen mit einer oder mehreren Pumpen, sowie verschiedenen Vorratsbehältern in Großkreisläufen oder Lagertanks, die an das System angeschlossen sind aber nicht im Kreislaufbetrieb betrieben werden, wie beispielsweise für Zuschlagstoffe, die in der Papierindustrie eingesetzt werden.
Biozide und/oder Enzyme werden hierzu in den Wasserkreislauf eingebracht, um die Vermehrung von Mikroorganismen zu hemmen und diese abzutöten oder zu schädigen. Solche Prozesshilfsmittel werden in den meisten Papierfabriken eingesetzt, wobei diese Zusatzstoffe nur in geringem Maße in das Papier gelangen sollen und nicht im Abwasser vorzufinden sein sollen. Aus diesem Grunde ist es wichtig, dass diese Hilfsmittel während der Abwasserreinigung effizient abgebaut werden können, um eine starke Umweltbelastung zu vermeiden.

Während der Papierherstellung sind die Stoffaufbereitungs- beziehungsweise Kreislaufwassersysteme durch eine Vielzahl von gelösten organischen Komponenten wie Kohlenhydrate oder Lignin teilweise stark belastet. Diese organischen Inhaltsstoffe bilden eine gute Grundlage für das Wachstum unterschiedlicher Mikroorganismen wie Bakterien, Pilze oder Hefen. Es bilden sich dann verschiedene Arten von Kolonien von Mikroorganismen im Wasserkreislauf, in Lagerbehältern, sowie an den Oberflächen, die mit dem Fabrikationswasser oder wässrigen Papieradditiven in Kontakt sind, wie beispielsweise Biofilme, Flocken oder Schleimbatzen. Eine solche Kolonie besteht aus einer Matrix extrazellulärer Polymere und darin eingebetteten Bakterienzellen. Durch den Sauerstoffverbrauch innerhalb einer Kolonie, können sich auch anaerobe Bakterien ansiedeln. Auf den Belägen können zudem auch verschiedene Pilze wachsen. Die Bildung von Kolonien solcher Mikroorganismen, die auch häufig als sogenannte "Schleimbildung" zu erkennen ist, wird durch die üblicherweise eingestellten Randbedingungen bei der Papierherstellung, wie den neutralen pH-Bereich, Temperaturen zwischen 40 und 60°C und chlorfrei gebleichte Faserstoffe begünstigt.

Im Gegensatz dazu wurde früher viel Alaun / Aluminium-Salze verwendet, so dass das System automatisch sauber gehalten wurde, da die störenden Stoffe durch Fixierung am Faserstoff und die direkte, milde biostatische Wirkung von Aluminium-Ionen ausgetragen wurden. Durch den damaligen Einsatz von Chlorgebleichten Zellstoffen und die dadurch enthaltenen Chlor-Verbindungen, wurde ebenfalls das Wachstum von Mikroorganismen gehemmt. Aufgrund des weitgehenden Verzichts auf chlorfrei gebleichte Faserstoffe und Fahrweisen im neutralen pH-Bereich sind die Beeinträchtigungen durch Schleimbildung deutlich stärker.

Die Schleimbildung führt zu diversen Problemen sowohl beim Produktionsablauf als auch im hergestellten Endprodukt. Während der Papierproduktion führt die Schleimbildung beispielsweise zu Ablagerungen im Maschinenkreislauf und zu Papierbahnabrissen und damit verbundenen Maschinenstillständen. Außerdem kann es zu Geruchsbelästigung, Verschlechterung der Entwässerung, das Verstopfen von Filtern und Sieben sowie der Beeinträchtigung der Wasseraufnahme der Trockenfilze kommen. Zusätzlich kommt es zu unerwünschtem Bläh- und Schwimmschlamm im Abwasser sowie verstärkter mikrobiell beeinflusster Korrosion von Maschinenteilen.

Die Qualitätseinbußen im Endprodukt, die durch die Schleimbildung hervorgerufen werden, ergeben sich insbesondere durch Flecken und Löcher im Papier, sowie eine erhöhte Keimbelastung, die Veränderung der Viskosität von eingesetzten Papieradditiven, Absenkung des pH-Wertes sowie unangenehme Geruchsbeeinträchtigungen. Solche Gerüche können entstehen, wenn im System leicht flüchtige organische Substanzen durch die Mikroorganismen produziert werden, deren Geruch als unangenehm eingestuft wird, wie insbesondere organische Schwefelverbindungen oder auch organische Säuren und Carbonylverbindungen.

In Papierfabriken ist es besonders wichtig, den Bereich der Stoffauflauf-Zuführung, sowie des Stoffauflaufes frei von Belägen zu halten, da sich alle Verunreinigungen, die sich in diesem Bereich befinden direkt im Papier in der Form von Produktfehlern vorzufinden sind und zu gravierenden Störungen des Produktionsprozesses führen können. Aus diesem Grund werden die Oberflächen im Bereich der Stoffauflauf-Zuführung und des Stoffauflaufs elektropoliert, um das Entstehen von Ablagerungen zu reduzieren oder zu vermeiden. Bei Stillständen der Papiermaschine werden diese Bereiche oft gründlich mechanisch und/oder chemisch gereinigt. Diese aufwändigen Reinigungsmaßnahmen machen deutlich, dass dieser Bereich ebenfalls bei der Biozidbehandlung die wichtigste Rolle spielt und möglichst effektiv mit Bioziden und/oder Enzymen behandelt werden muss.

In der Papierindustrie werden derzeit die Biozide in Lagertanks zur Konservierung und im Siebwasserbehälter eingesetzt, um eine Schleimbildung zu vermeiden. Bei Einsatz von Bioziden stellt sich immer das Problem der gleichmäßigen Verteilung des Wirkstoffes und des effektiven Einsatzes. Wird das Biozid im Papiermaschinenkreislauf über den Siebwasserbehälter eingebracht, dann verteilt sich das Biozid von dort aus im Produktionswasser-Kreislauf. Ein Nachteil bei der Dosierung des Biozids in den Siebwasserbehälter ist jedoch, dass sich die Hauptwirkung in erster Linie im Siebwasserbehälter selbst entfaltet und es je nach Größe des Behälters einige Zeit dauert, bis sich der Wirkstoff derart angereichert hat, bis er eine wirksame Konzentration erreicht hat, um die Mikroorganismen abzutöten oder in der Vermehrung zu hemmen.

Die Anreicherung der Biozide geschieht jedoch sehr langsam, da immer ein Teil des Produktionswassers mit dem Papier aus dem Kreislauf herausgeführt wird und von diesem Wasser ein Teil durch Vakuumsauger, Saugwalzen und die Pressenpartie aus dem Papier entfernt wird und dann in den Siebwasser 2 Kreislauf gegeben wird. Ein weiterer Teil wird dann in der Trockenpartie dem Papier durch Verdunstung entzogen. Durch die Verweilzeit der dosierten Biozide im Siebwasserbehälter, die je nach Größe des Behälters mehrere Minuten betragen kann, kommt es zudem zu einem gewissen Abbau der Biozide durch Reaktion mit Bakterien, Feinstoffen oder anderen chemischen Reaktionspartnern wie Resten reduktiver Bleiche oder durch anaeroben Abbau entstandene reduktive schwefelbasierte Produkte wie beispielsweise Sulfide. Somit ist die biozide Wirkung im Bereich der Stoffauflaufzuführung deutlich geringer, da ein Teil des bioziden Wirkstoffs bereits während der Verweilzeit im Siebwasserbehälter reagiert oder abgebaut wird, obwohl in diesem Bereich die Vermeidung von Ablagerungen und Verschleimungen eine wichtigere Rolle spielt als im Siebwasserbehälter selbst. Dadurch muss eine wesentlich größere Menge Biozid in den Siebwasser- oder Systembehälter dosiert werden, um den gewünschten Effekt in der aus dem Behälter führenden Leitung (z. B. der Stoffauflaufzuführung) erzielen zu können.

Hinzu kommt, dass sich der Volumenstrom im Stoffauflauf sowie die Durchlaufmenge durch den Siebwasserbehälter durch Änderungen der Produktionsparameter wie Flächengewicht, Produktionsgeschwindigkeit, Lippenöffnung, Strahlgeschwindigkeit, Stoffauflaufpumpendrehzahl und Druck im Stoffauflauf ändern können. Diese Volumenstromänderung bewirkt auch eine Änderung der Biozid-Konzentration und somit deren Wirksamkeit. Da sich bei Papiermaschinen die Wassermengen, die durch den Siebwasserkreislauf fließen, um bis zu 100 % ändern können, kann in einem solchen Fall die Dosierung des Biozids entweder zu hoch oder zu niedrig sein. In der Praxis werden aus diesem Grund Biozide/Enzyme häufig stoßweise eingesetzt und deren Dosiermenge auf das Gesamtvolumen des Systems hochgerechnet. Hierbei wird in der Regel keine Rücksicht darauf genommen, dass sich die Durchflussmengen im Laufe der Produktion ändern, sondern es wird immer die gleiche Menge an Biozid dosiert, die immer größer als nötig ist, um noch nötige Wirkung in der Stoffauflaufzuführung zu erzielen.

Aus der DE 10 2006 022 832 B3 ist beispielsweise bekannt, das zur Papierherstellung eingesetzte Wasser und/oder das Wasser von Zusatzkomponenten in Kontakt mit einem Vollmetallkatalysator zu bringen und diesem Wasser einmal wöchentlich bis einmal stündlich eine peroxidhaltige Lösung zuzugeben, so dass nach der Zugabe dieser Lösung die Peroxidkonzentration im Prozesswasser 1 bis 100 ppm beträgt. Die wasserstoffperoxidhaltige Lösung wird hierbei dem Wasser im Siebwasserkreislauf zugegeben, wobei kein spezieller Dosierungsort vorgesehen ist und Schwankungen der Papiermaschine nicht berücksichtigt werden.

Die DE 44 45 010 A1 beschreibt die Verwendung mindestens einer Enzymkomponente aus der Gruppe bestehend aus Carbohydrasen, Proteasen, Lipasen und Glykoproteasen und einer kurzkettigen Glykolkomponente zur Vermeidung der Schleimbildung und/oder Entfernung von Biofilm auf Oberflächen wasserführender Systeme, insbesondere industrieller Brauchwassersysteme. Die Dosierung erfolgt hierbei in einen Behälter am Stoffauflauf (Siebwasser 1), in den Nassausschluss oder in eine Mischbütte. Die Dosierung erfolgt jedoch unabhängig der variablen Prozessparameter.

Aus der DE 100 35 547 A1 ist außerdem ein Verfahren zur Schleimbekämpfung im Nassteil einer Papier- oder Kartonmaschine bekannt, bei dem das Siebwasser der Siebwasserleitung in mindestens zwei Teilströme aufgeteilt wird und mindestens ein Teilstrom mit Ultraschallenergie beaufschlagt wird. Die Beaufschlagung eines Nebenstroms mit Ultraschallenergie kann hierbei vorzugsweise in einer Rohrleitung und/oder in einem Zwischentopf erfolgen. Die Ultraschallbehandlung wird jedoch ebenfalls ohne Berücksichtigung von Schwankungen im Herstellungsprozess durchgeführt. In der DE 100 17 012 A1 wird ein Verfahren zur Herabsetzung der Bildung von Schleim und Ablagerungen in industriellen Anlagen beschrieben, in denen Wasser oder wässrige Prozessflüssigkeiten im Kreislauf geführt werden, wobei dem System schwefelfreies Lignin oder ein Derivat davon in einer Menge zugegeben wird, die proportional zu der Menge an in dem Wasser vorliegenden Schleim / Ablagerungen verursachenden Substanzen ist. Die DE 102 37 745 A1 schlägt ein Verfahren zur Steuerung der Biozidzugabe zu einer wässrigen Prozessflüssigkeit vor, wobei entweder der Sauerstoffgehalt oder das Redoxpotential der Prozessflüssigkeit gemessen werden und Biozid dann zudosiert, wenn entweder der Sauerstoffgehalt oder das Redoxpotential einen jeweils vorgegebenen Messwert unterschreitet. Bei diesen Verfahren wird jedoch ebenfalls keine Rücksicht auf Änderungen der Prozessparameter genommen.

Diese aus dem Stand der Technik bekannten Verfahren sind demnach mit Nachteilen behaftet, da sich die Wirkung der Biozide mit den ändernden Durchflussmengen ebenfalls ändert. Um in allen Systemzuständen eine biozide Wirkung zu erreichen, muss insgesamt immer mehr Biozid zudosiert werden, welches mit höheren Kosten und unnötiger Umweltbelastung verbunden ist. Durch die Schwankungen der Systemdurchflussmengen ist die Wirkung der Biozide nicht stabil, so dass eine erhöhte Kontrolle und Nachjustierung der Biozid-Dosierung notwendig ist. Eine unter bestimmten Systemparametern zu geringe Dosierung kann schlimmstenfalls zur Folge haben, dass das Biozid zu gering dosiert ist und somit nicht zuverlässig wirken kann.
Aufgabe der vorliegenden Erfindung ist es demnach, ein Verfahren zur Behandlung von wässrigen Prozessflüssigkeiten zur Verfügung zu stellen, welches die Nachteile aus dem Stand der Technik überwindet und eine diskontinuierliche Dosierung von Bioziden und/oder Enzymen ermöglicht. Wichtig ist hierbei, dass in dem Bereich der Stoffauflaufzuführung, die in Papiermaschinensystemen die wichtigste Stelle ist, eine bestimmte Biozid-Konzentration konstant gehalten werden kann, und zwar unabhängig von Änderungen der Produktionsparameter wie Flächengewicht, Produktionsgeschwindigkeit, Strahlgeschwindigkeit, Stoffauflaufpumpendrehzahl, Lippenöffnung und Druck im Stoffauflauf. Außerdem soll das Biozid und/oder Enzym effektiv eingesetzt werden, so dass kein zu starker Abbau des Biozids im Wasserkreislauf erfolgt und weder zu viel noch zu wenig Biozid in den Wasserkreislauf gegeben wird. Diese Aufgabenstellung stellt sich nicht nur bei der Papierherstellung, sondern bei jedem Prozess, bei dem größere Mengen an Prozessflüssigkeiten in geschlossenen oder teilgeschlossenen Systemen zirkulieren und im Volumenstrom schwanken.
Diese Aufgabe wird durch das erfindungsgemäße Verfahren zur Behandlung von wässrigen Prozessflüssigkeiten im teilgeschlossenen Siebwasserkreislauf bei der Papierherstellung, der mindestens einen Siebwasserbehälter und damit verbundene Rohrleitungen vom Siebwasserbehälter über den Vertikalsortierer zum Stoffauflauf enthält, mit Bioziden und/oder Enzymen zur Vermeidung und/oder Entfernung von Schleimablagerungen durch diskontinuierliche Dosierung der flüssigen Wirkstoffe oder Lösungen der festen Wirkstoffe gelöst wobei die Dosierung der Wirkstoffe in Abhängigkeit des Volumenstroms innerhalb der den Vorratsbehälter verlassenden Rohrleitungen in diese Rohrleitungen und/oder den Ansaugbereich der Rohrleitungen im Vorratsbehälter erfolgt.
Der Ansaugbereich der Rohrleitungen innerhalb des Vorratsbehälters definiert sich im Rahmen dieser Erfindung als der Bereich vor der Rohrleitungseinmündung, in dem die Strömungsgeschwindigkeit mindestens 30%, vorzugsweise mindestens 50%, der Strömungsgeschwindigkeit innerhalb der den Vorratsbehälter verlassenden Rohrleitung beträgt. Dadurch kann sichergestellt werden, dass nur eine unwesentliche Vermischung der dosierten Biozide und/oder Enzyme mit der gesamten Behälterflüssigkeit erfolgt, sondern diese unmittelbar in die Rohrleitung überführt werden.

Unter Bioziden werden Wirkstoffe und Zubereitungen verstanden, die einen oder mehrere Wirkstoffe enthalten und dazu bestimmt sind, auf chemischem oder biologischem Wege Schadorganismen (in diesem Fall insbesondere Mikroorganismen wie Bakterien, Pilze und Hefen) zu zerstören, abzuschrecken, in der Vermehrung zu hemmen, unschädlich zu machen, Schädigungen (Prozessstörungen) durch sie zu verhindern oder sie in anderer Weise zu bekämpfen oder dazu zu führen, dass sich biologische Ablagerungen wieder zersetzen oder lösen. Eine Vielzahl von Bioziden zur Behandlung von wässrigen Prozessflüssigkeiten ist aus dem zitierten Stand der Technik bereits bekannt. Als Enzyme können alle Enzyme eingesetzt werden, die einen Abbau von Biofilmen und/oder Mikroorganismen ermöglichen, wie beispielsweise Carbohydrasen, Proteasen, Lipasen und Glykoproteasen.

Dieses neuartige Verfahren ermöglicht erstmals eine effektive Dosierung von Bioziden und/oder Enzymen in variablen Wasserkreisläufen. Mittels dieses Verfahrens kann die Biozid-Konzentration im Wasserkreislauf an dem zu behandelnden Rohrleitungsbereich, der möglichst frei von Ablagerungen zu halten ist, konstant gehalten werden, auch wenn sich die Systemdurchflussmengen oft ändern, wie dies beispielsweise bei der Papierherstellung der Fall ist. Durch die Dosierung in den zu behandelnden Rohrleitungsbereich, der den Vorratsbehälter verlässt, wird ein unnötiger Abbau des Biozids und/oder Enzyms bei zu langer Verweilzeit im Vorratsbehälter verhindert, der zwangsläufig bei einer Dosierung in den Vorratsbehälter eintritt.

Es ist hierbei erfindungsgemäß bevorzugt, wenn die Dosierung des Biozids und/oder Enzyms direkt in den zu behandelnden Rohrleitungsbereich (nach dem Ansaugbereich des Vorratsbehälters), insbesondere die den Vorratsbehälter verlassenden Rohrleitungen erfolgt.

In einer bevorzugten Ausführungsform der Erfindung erfolgt die Ermittlung des Volumenstroms in den Rohrleitungen nicht durch direkte Messung, sondern wird aus Prozessparametern des Systems berechnet. Dies hat den besonderen Vorteil, dass der Volumenstrom nicht gesondert gemessen werden braucht, sondern auf Prozessparameter des Systems zurückgegriffen werden kann, um die Dosierung entsprechend anzupassen.

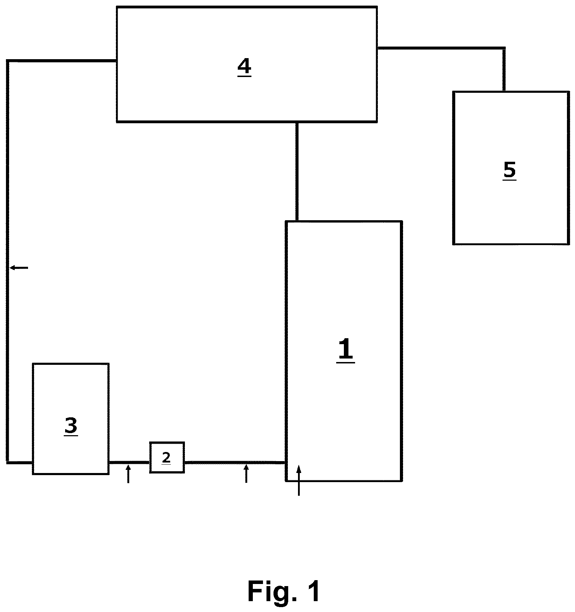

Ein solches System ist schematisch in Figur 1 dargestellt. Dabei bezeichnen die Pfeile in der Abbildung die bevorzugten Stellen für die Dosierung der Biozide und/oder Enzyme. Auf den Siebwasserbehälter 1 (1) folgt in Strömungsrichtung die Stoffauflaufpumpe (2), der Vertikalsortierer (3) und die Papiermaschine (4) mit Stoffauflauf, Siebpartie und Pressenpartie. Das dort abgetrennte Wasser gelangt wieder in den Siebwasserbehälter 1 (1) bzw. den Siebwasserbehälter 2 (5).
Es ist ebenfalls bevorzugt, wenn die Dosierung der flüssigen Wirkstoffe in den Ansaugbereich der Rohrleitung vom Siebwasserbehälter zum Vertikalsortierer im Siebwasserbehälter und/oder zwischen dem Siebwasserbehälter und dem Vertikalsortierer direkt in die Rohrleitung und/oder zusammen mit dem Verdünnungswasser und/oder zusammen mit den Papieradditiven und/oder zwischen dem Vertikalsortierer und dem Stoffauflauf erfolgt. Eine Dosierung von Bioziden und/oder Enzymen zusammen mit anderen flüssigen Komponenten hat den Vorteil, dass kein separater Anschluss für die Dosierung der Biozide und/oder Enzyme bereitgestellt werden muss.
Durch das vorliegende variable Verfahren ist man bei der Art der Dosierung kaum eingeschränkt. Es können diverse Dosierungsvarianten realisiert und deren jeweilige Vorteile - nochmals durch die bessere Effektivität des erfindungsgemäßen Verfahrens verbessert - genutzt werden. So kann man beispielsweise nicht nur an einer Stelle, sondern an mehreren Stellen der Rohrleitung dosieren und so die Wirkstoffverteilung optimieren. Dabei besteht auch die Möglichkeit, eine Wirkstoffkombination aus Bioziden und Enzymen als Gemisch an mehreren Stellen zu dosieren, soweit diese miteinander verträglich sind, oder aber eine Aufteilung der Wirkstoffe auf unterschiedliche Dosierstellen vorzunehmen. Eine weitere Möglichkeit ist es, zwei oder mehrere Wirkstoffe dicht beieinander oder in der Rohrleitung so versetzt zu dosieren, dass diese sich in der Wirkung unterstützen, beispielsweise durch Anhebung des Redoxpotentials oder der pH-Werts. Ebenso kann auch ein Teil der Dosierstellen kontinuierlich und ein anderer Teil diskontinuierlich betrieben werden.

So lassen sich besonders effektive Dosierformen erzielen, die die jüngsten Untersuchungsergebnisse aus dem Stand der Technik berücksichtigen, in denen mittels Stoß- und Verdrängungsmarkierung mit einer Lithiummarkierungssubstanz das Verweilzeitverhalten im Siebwasserkreislauf von Papiermaschinen untersucht wurde (R. Hüster, "Richtig dosieren" in: Papier aus Österreich, 03/2012, S. 32-33). Demnach ergibt sich eine erhöhte Wirksamkeit einer Biozidzugabe bei gleicher dosierter Gesamtmenge, wenn zunächst mit höchster Pumpenleistung eine hohe Konzentration geschaffen wird und dann für die restliche Zeit des Dosierintervalls mit geringerer Pumpenleistung ein gleichbleibendes Niveau gehalten wird. Mit dem erfindungsgemäßen Verfahren lässt sich dies besonders einfach und kostengünstig umsetzen, indem zu Beginn an mehreren Stellen dosiert wird und später die dem Stoffauflauf am nächsten gelegenen Dosierstellen abgeschaltet werden.

Das Verfahren zeichnet sich dadurch aus, dass die Biozidmenge sehr genau zur optimalen Wirkkonzentration geregelt werden kann, um die maximale Wirkung zu erzielen und dabei die geringsten möglichen Kosten, Nebenwirkungen und Umweltbelastungen zu erzeugen. Unter Nebenwirkungen sind hier beispielsweise Korrosion an Anlagenteilen, Abbau von Additiven und pH-Wert Schwankungen zu verstehen.

In einer weiteren bevorzugten Ausführungsform der vorliegenden Erfindung, erfolgt die Ermittlung des Volumenstroms durch Berechnung aus am Prozessleitsystem der Papiermaschine zur Verfügung stehenden Mess- und Regeldaten, insbesondere aus der Bahngeschwindigkeit, der Lippenöffnung, der Strahlgeschwindigkeit, der Stoffauflaufpumpendrehzahl, dem Druck im Stoffauflauf und/oder der Stoffauflaufaustragsmenge.
Ebenfalls Bestandteil der vorliegenden Erfindung ist ein geschlossenes oder teilgeschlossenes System für wässrige Prozessflüssigkeiten, das mindestens einen Vorratsbehälter und damit verbundene Rohrleitungen enthält, und zur Behandlung mit Bioziden und/oder Enzymen zur Vermeidung und/oder Entfernung von Schleimablagerungen mit Mitteln zur kontinuierlichen und/oder diskontinuierlichen Dosierung der flüssigen Wirkstoffe oder Lösungen der festen Wirkstoffe ausgestattet ist, wobei die Mittel zur Dosierung der Wirkstoffe an und/oder in den den Vorratsbehälter verlassenden Rohrleitungen und/oder in deren Ansaugbereich im Vorratsbehälter angebracht sind und deren Dosiergeschwindigkeit und/oder -menge in Abhängigkeit des Volumenstroms in den Rohrleitungen geregelt wird.
Es ist erfindungsgemäß bevorzugt, wenn der Regelparameter des Volumenstroms in den Rohrleitungen aus Prozessparametern des Systems berechnet wird.

Weiter ist es vorteilhaft, wenn im Ansaugbereich der Rohrleitung vom Siebwasserbehälter zum Vertikalsortierer im Siebwasserbehälter und/oder zwischen dem Siebwasserbehälter und dem Vertikalsortierer an der Rohrleitung und/oder der Verdünnungswasserzufuhr und/oder der Papieradditivzufuhr und/oder an der Rohrleitung zwischen dem Vertikalsortierer und dem Stoffauflauf Mittel zur Dosierung von Bioziden und/oder Enzymen vorhanden sind.

Zudem ist es erfindungsgemäß bevorzugt, wenn die Ermittlung des Volumenstroms durch Berechnung aus am Prozessleitsystem der Papiermaschine zur Verfügung stehenden Mess- und Regeldaten erfolgt, insbesondere aus der Bahngeschwindigkeit, der Lippenöffnung, der Strahlgeschwindigkeit, der Stoffauflaufpumpendrehzahl dem Druck im Stoffauflauf und/oder der Stoffauflaufaustragsmenge.

### Bezugszeichenliste

- 1: Siebwasserbehälter 1
- 2: Stoffauflaufpumpe
- 3: Vertikalsortierer
- 4: Papiermaschine (mit Stoffauflauf, Siebpartie und Pressenpartie)
- 5: Siebwasserbehälter 2

## Patentansprüche

1. Verfahren zur Behandlung von wässrigen Prozessflüssigkeiten im teilgeschlossenen Siebwasserkreislauf bei der Papierherstellung, der mindestens einen Siebwasserbehälter (1) und damit verbundene Rohrleitungen vom Siebwasserbehälter (1) über den Vertikalsortierer (3) zum Stoffauflauf enthält, mit Bioziden und/oder Enzymen zur Vermeidung und/oder Entfernung von Schleimablagerungen durch diskontinuierliche Dosierung der flüssigen Wirkstoffe oder Lösungen der festen Wirkstoffe, **dadurch gekennzeichnet, dass** die Dosierung der Wirkstoffe in Abhängigkeit des Volumenstroms innerhalb der Rohrleitungen
- in den Ansaugbereich der Rohrleitung vom Siebwasserbehälter (1) zum Vertikalsortierer (3) im Siebwasserbehälter (1) und/oder
- zwischen dem Siebwasserbehälter (1) und dem Vertikalsortierer (3) direkt in die Rohrleitung und/oder zusammen mit Verdünnungswasser und/oder zusammen mit Papieradditiven und/oder
- zwischen dem Vertikalsortierer (3) und dem Stoffauflauf erfolgt.

2. Verfahren nach Anspruch 1, **dadurch gekennzeichnet, dass** die Ermittlung des Volumenstroms in den Rohrleitungen nur aus Prozessparametern des Systems berechnet wird.

3. Verfahren nach Anspruch 1 oder 2, **dadurch gekennzeichnet, dass** die Ermittlung des Volumenstroms durch Berechnung aus am Prozessleitsystem der Papiermaschine (4) zur Verfügung stehenden Mess- und Regeldaten erfolgt.

4. Verfahren nach Anspruch 3, **dadurch gekennzeichnet, dass** es sich beiden Mess- und Regeldaten um die Bahngeschwindigkeit, die Lippenöffnung, den Druck im Stoffauflauf, die Stoffauflaufaustragsmenge und/oder die Summe der in den Siebwasserbehälter (1) einlaufenden Volumenströme abzüglich der Überlaufmengen zum Konstanthalten des Niveaus handelt.

5. Teilgeschlossenes System für wässrige Prozessflüssigkeiten im Siebwasserkreislauf bei der Papierherstellung, der mindestens einen Siebwasserbehälter (1) und damit verbundene Rohrverbindungen vom Siebwasserbehälter (1) über den Vertikalsortierer (3) zum Stoffauflauf enthält, und zur Behandlung mit Bioziden und/oder Enzymen zur Vermeidung und/oder Entfernung von Schleimablagerungen mit Mitteln zur diskontinuierlichen Dosierung der flüssigen Wirkstoffe oder Lösungen der festen Wirkstoffe ausgestattet ist, **dadurch gekennzeichnet, dass** die Mittel zur Dosierung der Wirkstoffe
- im Ansaugbereich der Rohrleitung vom Siebwasserbehälter (1) zum Vertikalsortierer (3) im Siebwasserbehälter (1) und/oder
- zwischen dem Siebwasserbehälter (1) und dem Vertikalsortierer an der Rohrleitung und/oder der Verdünnungswasserzufuhr und/oder der Papieradditivzufuhr und/oder
- an der Rohrleitung zwischen dem Vertikalsortierer (3) und dem Stoffauflauf angebracht sind und derart eingerichtet sind, dass deren Dosiergeschwindigkeit und/oder -menge in Abhängigkeit des Volumenstroms in den Rohrleitungen geregelt wird.

6. System nach Anspruch 5, **dadurch gekennzeichnet, dass** es derart eingerichtet ist, dass der Regelparameter des Volumenstroms in den Rohrleitungen aus Prozessparametern des Systems berechnet wird.

7. System nach Anspruch 5 oder 6, **dadurch gekennzeichnet, dass** es derart eingerichtet ist, dass die Ermittlung des Volumenstroms durch Berechnung aus am Prozessleitsystem der Papiermaschine (4) zur Verfügung stehenden Mess- und Regeldaten erfolgt.

8. System nach Anspruch 7, **dadurch gekennzeichnet, dass** es sich bei den zur Berechnung genutzten Mess- und Regeldaten um die Bahngeschwindigkeit, die Lippenöffnung, den Druck im Stoffauflauf, die Stoffauflaufaustragsmenge und/oder die Summe der in den Siebwasserbehälter (1) einlaufenden Volumenströme abzüglich der Überlaufmengen zum Konstanthalten des Niveaus handelt.

## Claims

1. Process for the treatment of aqueous process liquids in partly-closed sieve circulation systems for paper production which contain at least a sieve water tank (1) and the connected pipes from the sieve water tank (1) via the vertical pressure screen (3) to the headbox, using biocides and/or enzymes for the prevention and/or removal of slime sediments through the discontinuous dosing of liquid active ingredients or solutions of solid active ingredients, **characterised in that** the dosing of the active ingredients occurs depending on the volume flow within the pipes
- in the intake area of the pipe from the sieve water tank (1) to the vertical pressure screen (3) in the sieve water tank (1) and/or
- between the sieve water tank (1) and the vertical pressure screen (3) directly in the pipe and/or together with the dilution water and/or together with paper additives and/or
- between the vertical pressure screen (3) and the headbox.

2. Process according to Claim 1, **characterised in that** the determination of the volume flow in the pipes is only calculated from process parameters of the system.

3. Process according to Claims 1 or 2, **characterised in that** the determination of the volume flow occurs through calculation from available measurement and control data from the process control system of the paper machine (4).

4. Process according to Claim 3, **characterised in that** the measurement and control data concern the track speed, the lip opening, the pressure in the headbox, the headbox discharge quantity and/or
the sum of the volume flows entering the sieve water tank (1) minus the overflow quantities for maintenance of the level.

5. Partly-closed system for aqueous process liquids in the sieve water circulation system for paper manufacture, which contains at least a sieve water tank (1) and the connected pipes from the sieve water tank (1) via the vertical pressure screen (3) to the headbox, and equipped for treatment using biocides and/or enzymes for the prevention and/or removal of slime sediment using means for the discontinuous dosing of liquid active ingredients or solutions of solid active ingredients, **characterised in that** the means for dosing the active ingredients are attached
- in the intake area of the pipe from the sieve water tank (1) to the vertical pressure screen (3) in the sieve water tank (1) and/or
- between the sieve water tank (1) and the vertical pressure screen on the pipe and/or the dilution water supply and/or the paper additive supply and/or
- to the pipe between the vertical pressure screen (3) and the headbox
and are equipped so that the dosing speed and/or quantity are controlled dependent on the volume flows in the pipes.

6. System according to Claim 5, **characterised in that** it is equipped so that the control parameter of the volume flow in the pipes is calculated from process parameters of the system.

7. System according to Claim 5 or 6, **characterised in that** it is equipped so that the determination of the volume flow occurs through calculation from measurement and control data available on the process control system of the paper machine (4).

8. System according to Claim 7, **characterised in that** the measurement and control data used for the calculation concerns the track speed, the lip opening, the pressure in the headbox, the headbox discharge quantity and/or the sum of the volume flows flowing into the sieve water tank (1) minus the overflow quantities for the maintenance of the level.

## Revendications

1. Procédé de traitement de liquides de processus aqueux dans le circuit d'eau blanche partiellement fermé dans la production de papier, qui contient au moins un réservoir d'eau blanche (1) et des conduites reliés à celui-ci depuis le réservoir d'eau blanche (1) via le trieur vertical (3) jusqu'à la caisse de tête, avec des biocides et/ou des enzymes pour empêcher et/ou éliminer les dépôts de mucus par dosage discontinu des substances actives liquides ou des solutions des substances actives solides, **caractérisé en ce que** le dosage des substances actives a lieu en fonction du débit volumique
- à l'intérieur des conduites dans la zone d'aspiration de la conduite depuis le réservoir d'eau blanche (1) jusqu'au trieur vertical (3) dans le réservoir d'eau blanche (1) et/ou
- entre le réservoir d'eau blanche (1) et le trieur vertical (3) directement dans la conduite et/ou avec de l'eau de dilution et/ou des additifs pour papier et/ou
- entre le trieur vertical (3) et la caisse de tête.

2. Procédé selon la demande 1, **caractérisé en ce que** la détermination du débit volumique dans les conduites n'est calculée qu'à partir des paramètres de processus du système.

3. Procédé selon la demande 1 ou 2, **caractérisé en ce que** le débit volumique est déterminé par calcul à partir des données de mesure et de commande disponibles dans le système de commande du processus de la machine à papier (4).

4. Procédé selon la demande 3, **caractérisé en ce que** les données de mesure et de commande sont la vitesse de la bande, l'ouverture des lèvres, la pression dans la caisse de tête, la quantité de décharge de la caisse de tête et/ou
la somme des débits volumiques entrant dans le réservoir d'eau blanche (1) moins les quantités de débordement pour maintenir le niveau constant.

5. Système partiellement fermé pour des liquides de processus aqueux dans le circuit d'eau blanche dans la production de papier, qui comporte au moins un réservoir d'eau blanche (1) et des raccords de conduites reliés à celui-ci depuis le réservoir d'eau blanche (1) via le trieur vertical (3) jusqu'à la caisse de tête, et équipé de moyens pour le dosage discontinu des substances actives liquides ou des solutions des substances actives solides pour le traitement avec des biocides et/ou des enzymes pour empêcher et/ou éliminer les dépôts de mucus, **caractérisé en ce que** les moyens pour doser les substances actives sont montés
- dans la zone d'aspiration de la conduite depuis le réservoir d'eau blanche (1) jusqu'au trieur vertical (3) dans le réservoir d'eau blanche (1) et/ou
- entre le réservoir d'eau blanche (1) et le trieur vertical sur la conduite et/ou l'alimentation en eau de dilution et/ou l'alimentation en additif de papier et/ou
- sur la conduite entre le trieur vertical (3) et la caisse de tête et sont réglés de telle sorte que leur vitesse de dosage et/ou leur quantité soit régulée en fonction du débit volumique dans les conduites.

6. Système selon la demande 5, **caractérisé en ce qu'**il est configuré de telle sorte que le paramètre de commande du débit volumique dans les conduites soit calculé à partir des paramètres de processus du système.

7. Système selon la revendication 5 ou 6, **caractérisé en ce qu'**il est configuré de telle sorte que la détermination du débit volumique est effectuée par calcul à partir des données de mesure et de commande disponibles sur le système de commande du processus de la machine à papier (4).

8. Le système selon la demande 7, **caractérisé en ce que** le système utilisé pour le calcul est la vitesse de la bande, l'ouverture de la lèvre, la pression dans la caisse de tête, la quantité de décharge de la caisse de tête et/ou la somme des débits volumiques entrant dans le réservoir d'eau blanche (1) moins les quantités de débordement pour maintenir le niveau constant.
